# EUROPEAN PATENT SPECIFICATION

(11) **EP 2 422 922 B1**
(45) Date of publication and mention of the grant of the patent: **13.03.2013**
(21) Application number: 11179429.3
(22) Date of filing: 30.08.2011
(51) Int. Cl.: B23P 19/08, B25B 27/00, B25B 5/12

(54) **Apparatus for inserting an annular seal on a pipe, in particular a corrugated pipe**
Vorrichtung zum Einbringren einer ringförmigen Dichtung auf einem Rohr, insbesondere auf einem Wellrohr
Dispositif pour insérer un joint annulaire sur un tuyau, en particulier sur un tuyau ondulé

(30) Priority: 30.08.2010 IT BO20100531
(43) Date of publication of application: 29.02.2012
(73) Proprietor: SICA S.P.A., 48011 Alfonsine (Ravenna) (IT)
(72) Inventor: Gulminelli, Marco, 48021 Lavezzola (IT)
(74) Representative: Jorio, Paolo

(56) References cited:
- EP-A1- 1 586 410
- GB-A- 1 236 005
- JP-A- 52 133 410
- US-B1- 6 290 210

## Description

The present invention relates to an apparatus for inserting an annular seal on a pipe, in particular a corrugated pipe.

In particular, the present invention relates to an apparatus of the type comprising a supporting block of a substantially parallelepiped shape provided with a central hole capable of receiving a pipe presenting at least one annular cavity provided on the outer surface of the pipe itself; and a plurality of gripping devices, which are evenly distributed around the central hole, are provided, each one, with a respective clamp movable between a clamping position and a releasing position of a seal, and are slidingly coupled to the support block to move radially from and towards the central hole itself.

Generally, each clamp comprises a first jaw slidingly coupled to the supporting block, and a second jaw hinged to the first jaw for rotating between the mentioned clamping and releasing positions under the thrust of an actuating cylinder, which is mounted on the first jaw, and has an outlet rod hinged to the second jaw itself.

EP 1 586 410 A1 discloses an apparatus for inserting an annular seal on a pipe according to the preamble of claim 1.

The known apparatuses of the type described above present certain drawbacks mostly deriving from the fact that, during the widening of the seal, the actuating cylinders are not able to guarantee the correct permanence of the corresponding clamps in the corresponding clamping positions.

It is an object of the present invention to provide an apparatus for inserting an annular seal on a pipe, in particular a corrugated pipe, which is free from the drawbacks described above and is of simple and economic implementation.

According to the present invention, there is provided an apparatus for inserting an annular seal on a pipe, in particular a corrugated pipe, as claimed in the attached claim 1. Preferred embodiment, are presented in the dependent claims.

The present invention will now be described with reference to the annexed drawings, illustrating a non limitative example of embodiment, in which:
Figure 1 is a schematic perspective view of a preferred embodiment of the apparatus of the present invention;
Figure 2 is a schematic perspective view of a detail of Figure 1;
Figure 3 is a schematic perspective view of a detail of Figure 2;
Figure 4 is a schematic side view of a detail of Figure 3 shown in two different operating positions; and
Figure 5 illustrates schematically the operation of the detail of Figure 3.

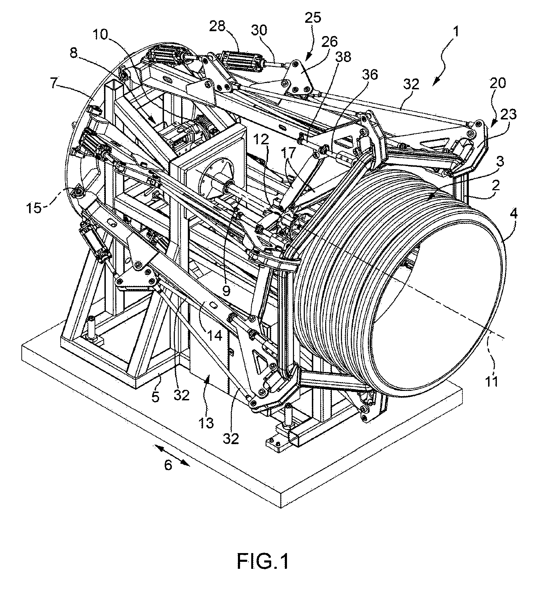

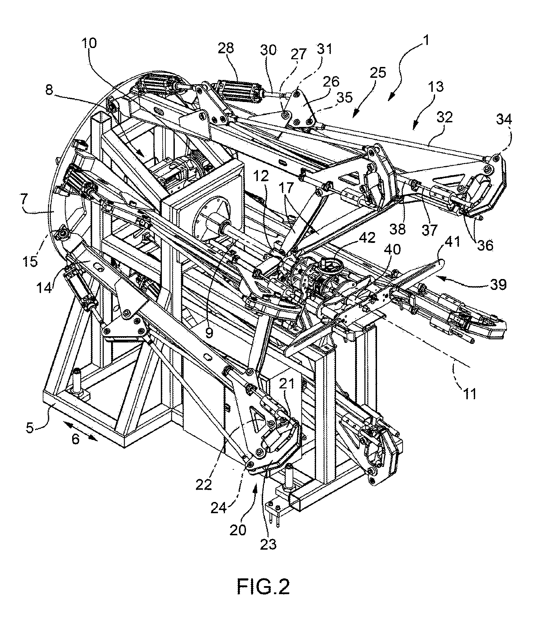

With reference to Figures 1 and 2, with 1 is indicated, as a whole, an apparatus for inserting an annular seal 2 of a known type in an annular cavity 3 provided on the outer surface of a corrugated pipe 4 having one succession of cavities 3 axially aligned with each other.

The device 1 comprises a supporting frame 5, which extends in a substantially horizontal direction 6, and is longitudinally limited, in correspondence to one end thereof, by a flat plate 7 mounted perpendicular to the direction 6 itself.

The supporting frame 5 supports an actuating device 8 comprising a transmission screw 9 coupled swiveling to the frame 5 to rotate, with respect to the frame 5 and under the thrust of an electric motor 10, around its own longitudinal axis 11 parallel to the direction 6, and a slide 12, which is slidingly coupled to the frame 5, and is coupled, also, to the screw 9 by means of a screw/nut-screw coupling to make rectilinear movements along the screw 9 in the direction 6.

The device 1 also comprises a plurality of gripping devices 13 (six devices 13 in this case), which are evenly distributed around the axis 11, and each one comprising a respective articulated arm 14, which is hinged in correspondence to one end thereof to the plate 7 to rotate, with respect to the plate 7, around a fulcrum axis 15 substantially transverse to the axis 11, and extends in a direction 16, whose orientation depends on the position of the arm 14 around the axis 15.

The arm 14 is also connected to the slide 12 through the interposition of a connecting rod 17, extending between two rotation axes 18, 19 parallel to each other and to the rotation axis 15, and of which the axis 18 is the rotation axis of the connecting rod 17 with respect to the slide 12 and the axis 19 is the rotation axis of the connecting rod 17 with respect to the arm 14.

The arm 14 supports in correspondence to a free end thereof a gripping member 20 comprising a first jaw 21 hinged to the arm 14 to rotate, with respect to the arm 14, around a fulcrum axis 22 parallel to the axes 18, 19 and a second jaw 23 hinged in correspondence to a mid-point thereof to the arm 14 to rotate with respect to the arm 14, around a fulcrum axis 24 parallel to the axis 22.

The jaws 21, 23 are moved relative to one another between a clamping position and a releasing position of the seal 2 by a toggle closing device 25 comprising a rocker arm 26 hinged at an intermediate point of the arm 14 to rotate, with respect to the arm 14, around a fulcrum axis 27 parallel to the axis 22, 24 under the thrust of an actuating cylinder 28, which is hinged to the arm 14 to rotate, with respect to the arm 14, around a fulcrum axis 29 parallel to the axis 27, and presents an outlet rod 30 which is hinged to a first end of the rocker arm 26 to rotate, with respect to the rocker arm 26, around a fulcrum axis 31 parallel to the axis 29.

Each jaw 21, 23 is connected to a second end of the rocker arm 26 by means of a corresponding connecting rod 32, which has a longitudinal axis 33 and extends between two rotation axes 34, 35, of which axis 34 is the rotation axis of the connecting rod 32 with respect to the corresponding jaw 21, 23 and the axis 35 is the rotation axis of the connecting rod 32 with respect to the rocker arm 26.

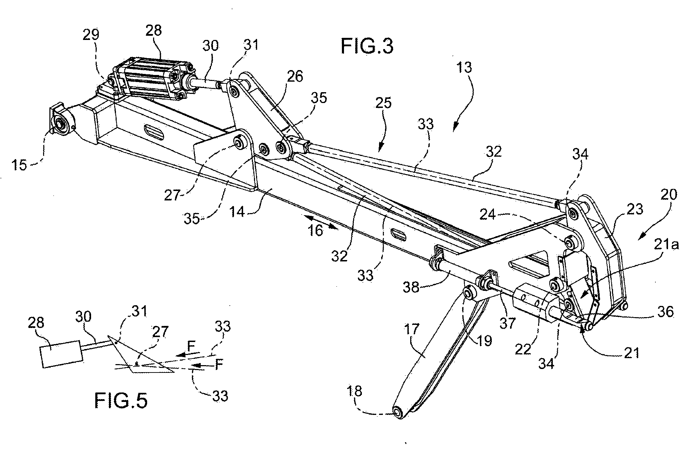

The rod 30 is movable between an extracted position, in which the rocker arm 26 is rotated (clockwise in Figure 3) to close the jaws 21, 23, and a retracted position, in which the rocker arm 26 is rotated (counterclockwise in Figure 3) for opening the jaws 21, 23 themselves.

According to that illustrated in Figure 5, the permanence of the jaws 21, 23 in their clamping position is ensured by the fact that the longitudinal axis 33 of each connecting rod 32 and the rod 30 of the cylinder 28 extend from opposite sides of the fulcrum axis 27 of the rocker arm 26. Consequently, when one of the connecting rods 32 is urged by a longitudinal force F directed towards the rocker arm 26 and, therefore, tending to open the corresponding jaws 21, 23, the force F generates a torque on the rocker arm 26 capable of moving the rocker arm 26 clockwise and to stabilize, therefore, the closure of the jaws 21, 23.

With reference to Figures 2 and 3, each arm 14 is provided, in addition, with a pair of supporting pins 36, which extend in the direction 16, and are arranged on opposite sides of the arm 14 itself. Each pin 36 is mounted on the outlet rod 37 of an actuating cylinder 38 fixed to the arm 14 parallel to the direction 16, and is moved from the cylinder 38 between an extracted position, in which the pin 36 is tangentially facing the corresponding member 20, and a retracted position, in which the pin 36 and the corresponding member 20 are tangentially offset one from the other.

The device 1 is further provided with an end stroke device 39 comprising a support shaft 40, which extends in front of the screw 9 in the direction 6, is mounted coaxially to the axis 11, and supports a stop bar 41, which extends transversely to the axis 11 to stop the pipe 4 in the direction 6, and is slidingly coupled to the shaft 40 to perform, with respect to the frame 5 and under the control of an adjustment handwheel 42, rectilinear movements in the direction 6 itself.

According to a variant not shown, the adjustment handwheel 42 is deleted and replaced with a motor actuated device.

The operation of the apparatus 1 will now be described with reference to Figure 1, and from a moment wherein:
the arms 14 are arranged in a resting position, wherein the gripping member 20 are arranged at a radial distance from the axis 11 as a function of the diameter of the seal 2;
the members 20 are arranged in their release positions;
the support pins 36 of each arm 14 are arranged in their extracted positions; and
the bar 41 has been moved along the axis 11 by way of the adjustment handwheel 42 depending on the position of the cavity 3 in which to insert the seal 2.

Once the seal 2 is placed on the pins 36, the cylinders 28 are activated to move the corresponding members 20 in their clamping positions of the seal 2; and the pins 36 are then moved to their retracted positions by the corresponding actuating cylinder 38 so as to disengage the seal 2 itself.

At this point, the screw 9 is placed in rotation around the axis 11 by the motor 10 so as to allow the slide 12 to move towards the bar 41 in the direction 6 and the arms 14 to rotate around the corresponding axis 15 in an operating position, wherein the members 20 are distanced from the axis 11 to elastically expand the seal 2, which takes the form of a polygon, a hexagon in this case, comprising a plurality of substantially rectilinear sections arranged between the members 20 themselves.

Subsequently, the pipe 4 is moved in contact with the bar 41 in a position substantially coaxial to the axis 11, and the direction of rotation of the screw 9 is reversed so as to allow the slide 12 to move towards the plate 7 in the direction 6, the arms 14 to rotate around the corresponding axis 15 towards the resting position, and the substantially rectilinear sections of the seal 2 to be fit within the cavity 3.

Finally, the cylinders 28 are activated to move the corresponding members 20 in the release positions of the seal 2 so as to allow the seal 2 to complete its insertion into the cavity 3.

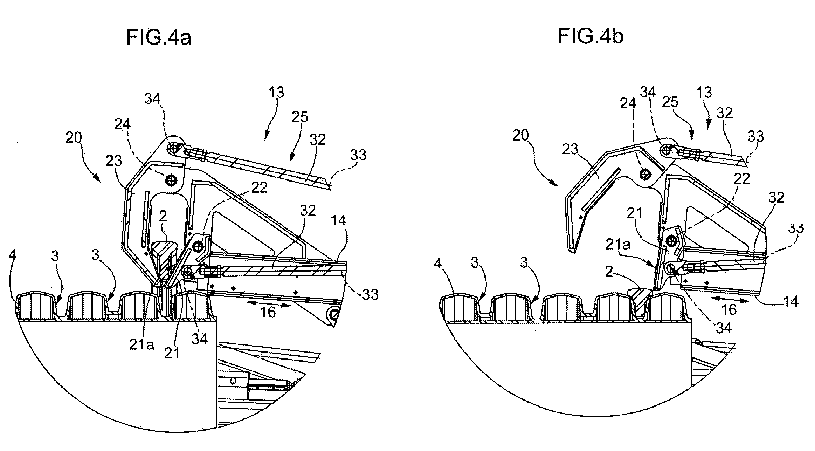

Considering that mentioned above, it should be stated that:
the position of the slide 12 along the screw 9 and, therefore, of the arms 14 around the axis 15 is selectively controlled by, for example, an encoder (not shown) associated with the motor 10 and an electronic control unit (not shown) capable of controlling the operation of the motor 10 according to signals from the encoder (not shown) itself; and
each jaw 21 is arranged between the plate 7 and the corresponding jaw 23, and is limited by a substantially flat support surface 21a, which, when the member 20 is open, is arranged substantially parallel to a side wall of the cavity 3 so as to define a ramp adapted to allow the correct inserting of the seal 2 within the cavity 3 (Figures 4a and 4b).

## Claims

1. An apparatus for inserting an annular seal (2) on a pipe (4), in particular a corrugated pipe (4), the apparatus comprising a supporting frame (5); a plurality of gripping devices (13) for the seal (2), distributed about a longitudinal axis (11) of the supporting frame (5), each gripping device (13) being provided with a gripping member (20) having two jaws (21, 23) mounted to rotate with respect to each other between a clamping position and a releasing position of the seal (2); and an actuating device (8) for moving the gripping devices (13) to and from the first axis (11); and being **characterized in that** each gripping device (13) further comprises toggle closing means (25) adapted to move and keep the corresponding jaws (21, 23) in their clamping position.

2. An apparatus according to claim 1, wherein the toggle closing means (25) comprise a rocker arm (26) mounted to rotate about a given fulcrum axis (27), a connecting rod (32) interposed between each jaw (21, 23) and the rocker arm (26), and actuator means (28) for moving the rocker arm (26) about the fulcrum axis (27); the actuator means (28) and each connecting rod (32) being arranged so as to exert respective forces extending from opposite sides of the fulcrum axis (27) on the rocker arm (26).

3. An apparatus according to claim 2, wherein each jaw (21, 23) is mounted to rotate about a respective first fulcrum axis (22, 24), and each connecting rod (32) is mounted to rotate, with respect to the corresponding jaw (21, 23), about a corresponding second fulcrum axis (34) different from the first fulcrum axis (22, 24) and, with respect to the rocker arm (26), about a corresponding third fulcrum axis (35).

4. An apparatus according to claim 2 or 3, wherein the actuator means (28) comprise an actuating cylinder (28) having an outlet rod (30) connected to the rocker arm (26).

5. An apparatus according to any one of the preceding claims, wherein each gripping device (13) comprises a supporting arm (14) of the corresponding gripping member (20) hinged to the supporting frame (5) to rotate about a fourth fulcrum axis (15).

6. An apparatus according to claim 5, wherein the actuating device (8) comprises a screw (9) mounted to rotate about said longitudinal axis (11) and a slide (12) coupled to the screw (9) by means of a screw/nut-screw coupling; each supporting arm (14) being connected to the slide (12) so as to move from and towards the longitudinal axis (11) upon the rotation of the screw (9) about the longitudinal axis (11) itself.

7. An apparatus according to claim 6, wherein for each gripping device (13), the actuating device (8) comprises a respective further connecting rod (17) pivotally coupled to the corresponding supporting arm (14) and to the slide (12).

8. An apparatus according to claim 6 or 7, wherein the actuating device (8) further comprises an electric motor (10) for imparting a rotary movement about said longitudinal axis (11) to the screw (9), and a control unit for selectively controlling the angular position of the screw (9) about the longitudinal axis (11) and, therefore, of the supporting arms (14) about the corresponding fourth fulcrum axes (15).

## Patentansprüche

1. Vorrichtung zum Anbringen einer ringförmigen Dichtung (2) auf einem Rohr (4), insbesondere auf einem Wellrohr (4), wobei die Vorrichtung aufweist:
einen Halterahmen (5);
mehrere um eine Längsachse (11) des Halterahmens (5) herum verteilte Greifeinrichtungen (13) für die Dichtung (2), wobei jede Greifeinrichtung (13) ein Greifelement (20) mit zwei Klauen (21, 23) aufweist, die derart montiert sind, dass sie sich zwischen einer Klemmposition und einer Freigabeposition der Dichtung (2) relativ zueinander drehen; und
eine Antriebseinrichtung (8) zum Bewegen der Greifeinrichtungen (13) zur ersten Achse (11) hin und von der ersten Achse weg;
**dadurch gekennzeichnet, dass**
jede Greifeinrichtung (13) ferner eine Gelenkhebelschließeinrichtung (25) aufweist, die dazu geeignet ist, die entsprechenden Klauen (21, 23) in ihre Klemmposition zu bewegen und in dieser Position zu halten.

2. Vorrichtung nach Anspruch 1, wobei die Gelenkhebelschließeinrichtung (25) aufweist:
einen Kipphebel (26), der für eine Drehbewegung um eine vorgegebene Drehachse (27) montiert ist;
eine zwischen jeder Klaue (21, 23) und dem Kipphebel (26) angeordnete Verbindungsstange (32); und
eine Antriebseinrichtung (28) zum Bewegen des Kipphebels (26) um die Drehachse (27),
wobei die Antriebseinrichtung (28) und jede der Verbindungsstangen (32) derart angeordnet sind, dass von gegenüberliegenden Seiten der Drehachse (27) jeweilige Kräfte auf den Kipphebel (26) ausgeübt werden.

3. Vorrichtung nach Anspruch 2, wobei jede Klaue (21, 23) derart montiert ist, dass sie sich um eine jeweilige erste Drehachse (22, 24) dreht, und wobei jede Verbindungsstange (32) derart montiert ist, dass sie sich bezüglich der entsprechenden Klaue (21, 23) um eine entsprechende zweite Drehachse (34) dreht, die von der ersten Drehachse (22, 24) verschieden ist, und bezüglich des Kipphebels (26) um eine entsprechende dritte Drehachse (35).

4. Vorrichtung nach Anspruch 2 oder 3, wobei die Antriebseinrichtung (28) einen Antriebszylinder (28) mit einer mit dem Kipphebel (26) verbundenen Austrittsstange (30) aufweist.

5. Vorrichtung nach einem der vorangehenden Ansprüche, wobei jede Greifeinrichtung (13) einen Haltearm (14) des entsprechenden Greifelements (20) aufweist, der am Halterahmen (5) für eine Drehbewegung um eine vierte Drehachse (15) drehbar gehalten wird.

6. Vorrichtung nach Anspruch 5, wobei die Antriebseinrichtung (8) eine für eine Drehbewegung um die Längsachse (11) montierte Schraube (9) und ein Gleitelement (12) aufweist, das durch eine Schraube-Mutter-Verbindung mit der Schraube (9) verbunden ist, wobei jeder Haltearm (14) mit dem Gleitelement (12) derart verbunden ist, dass er sich durch eine Drehbewegung der Schraube (9) um die Längsachse (11) von der Längsachse (11) weg oder zu ihr hin bewegt.

7. Vorrichtung nach Anspruch 6, wobei die Antriebseinrichtung (8) für jede Greifeinrichtung (13) eine jeweilige weitere Verbindungsstange (17) aufweist, die mit dem entsprechenden Haltearm (14) und mit dem Gleitelement (12) schwenkbar verbunden ist.

8. Vorrichtung nach Anspruch 6 oder 7, wobei die Antriebseinrichtung (8) ferner einen Elektromotor (10) zum Versetzen der Schraube (9) in eine Drehbewegung um die Längsachse (11) und eine Steuereinheit zum selektiven Steuern der Winkelposition der Schraube (9) um die Längsachse (11) und damit der Haltearme (14) um die entsprechenden vierten Drehachsen (15) aufweist.

## Revendications

1. Appareil permettant d'insérer un joint d'étanchéité annulaire (2) sur un tuyau (4), en particulier un tuyau ondulé (4), l'appareil comprenant un châssis de support (5) ; une pluralité de dispositifs de préhension (13) pour le joint d'étanchéité (2), répartis autour d'un axe longitudinal (11) du châssis de support (5), chaque dispositif de préhension (13) étant pourvu d'un élément de préhension (20) ayant deux mâchoires (21, 23) montées de façon à tourner l'une par rapport à l'autre entre une position de serrage et une position de libération du joint d'étanchéité (2) ; et un dispositif d'actionnement (8) pour déplacer les dispositifs de préhension (13) vers et depuis le premier axe (11) ; et étant **caractérisé en ce que** chaque dispositif de préhension (13) comprend en outre des moyens de fermeture à genouillère (25) adaptés pour déplacer et maintenir les mâchoires correspondantes (21, 23) dans leur position de serrage.

2. Appareil selon la revendication 1, dans lequel les moyens de fermeture à genouillère (25) comprennent un culbuteur (26) monté de façon à tourner autour d'un axe de pivotement donné (27), une bielle (32) interposée entre chaque mâchoire (21, 23) et le culbuteur (26), et des moyens d'actionnement (28) pour déplacer le culbuteur (26) autour de l'axe de pivotement (27) ; les moyens d'actionnement (28) et chaque bielle (32) étant disposés de manière à exercer des forces respectives s'étendant à partir de côtés opposés de l'axe de pivotement (27) sur le culbuteur (26).

3. Appareil selon la revendication 2, dans lequel chaque mâchoire (21, 23) est montée de façon à tourner autour d'un premier axe de pivotement respectif (22, 24), et chaque bielle (32) est montée de façon à tourner, par rapport à la mâchoire correspondante (21, 23), autour d'un deuxième axe de pivotement correspondant (34) différent du premier axe de pivotement (22, 24) et, par rapport au culbuteur (26), autour d'un troisième axe de pivotement correspondant (35).

4. Appareil selon la revendication 2 ou 3, dans lequel les moyens d'actionnement (28) comprennent un cylindre d'actionnement (28) ayant une tige de sortie (30) reliée au culbuteur (26).

5. Appareil selon l'une quelconque des revendications précédentes, dans lequel chaque dispositif de préhension (13) comprend un bras de support (14) de l'élément de préhension correspondant (20) articulé sur le châssis de support (5) pour tourner autour d'un quatrième axe de pivotement (15).

6. Appareil selon la revendication 5, dans lequel le dispositif d'actionnement (8) comprend une vis (9) montée de façon à tourner autour dudit axe longitudinal (11) et une glissière (12) couplée à la vis (9) au moyen d'un accouplement vis/vis écrou ; chaque bras de support (14) étant relié à la glissière (12) de manière à se déplacer depuis et vers l'axe longitudinal (11) lors de la rotation de la vis (9) autour de l'axe longitudinal (11) lui même.

7. Appareil selon la revendication 6, dans lequel pour chaque dispositif de préhension (13), le dispositif d'actionnement (8) comprend une bielle supplémentaire respective (17) couplée en pivotement au bras de support correspondant (14) et à la glissière (12).

8. Appareil selon la revendication 6 ou 7, dans lequel le dispositif d'actionnement (8) comprend en outre un moteur électrique (10) pour communiquer un mouvement de rotation autour dudit axe longitudinal (11) à la vis (9), et une unité de commande pour commander de manière sélective la position angulaire de la vis (9) autour de l'axe longitudinal (11) et, par conséquent, des bras de support (14) autour du quatrième axe de pivotement correspondant (15).
